# EUROPEAN PATENT APPLICATION

(11) **EP 4 675 767 A1**
(43) Date of publication of application: **07.01.2026**
(21) Application number: 24880100.3
(22) Date of filing: 16.10.2024
(51) Int. Cl.: H01M 10/6556, H01M 10/6567, H01M 10/659, H01M 10/663, H01M 10/613, H01M 10/625, H01M 10/6551

(54) **BATTERY PACK AND ELECTRIC VEHICLE INCLUDING SAME**

(30) Priority: 20.10.2023 KR 20230141028
(71) Applicant: LG Energy Solution, Ltd., Seoul 07335 (KR)
(72) Inventor: LEE, Jae Hyun, Daejeon 34122 (KR)
(74) Representative: Plasseraud IP
(86) International application number: PCT/KR2024/015648
(87) International publication number: WO 2025/084763

(57) **Abstract**

The present technology provides a battery pack including a cell block with a plurality of battery cells, and a pack housing accommodating the cell block and including a cooling plate connected to the cell block, in which the cooling plate includes a first cooling channel spaced a first distance from the cell block and configured to allow a first cooling fluid to flow therethrough, and a second cooling channel spaced a second distance, which is greater than the first distance, from the cell block and configured to allow a second cooling fluid to flow therethrough, and the first cooling fluid and the second cooling fluid are different from each other.

## Description

### [Technical Field]

The present invention relates to a battery cell and an electric vehicle including the same.

This application claims the benefit of priority based on Korean Patent Application No. 10-2023-0141028, filed on October 20, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery pack and an electric vehicle including the same.

### [Technical Solution]

An aspect of the present invention provides a battery pack including a cell block with a plurality of battery cells, and a pack housing accommodating the cell block and including a cooling plate connected to the cell block, in which the cooling plate includes a first cooling channel spaced a first distance from the cell block and configured to allow a first cooling fluid to flow therethrough, and a second cooling channel spaced a second distance from the cell block and configured to allow a second cooling fluid to flow therethrough, wherein the second distance is greater than the first distance, and the first cooling fluid and the second cooling fluid are different from each other.

In example embodiments, the first cooling fluid may be a coolant, and the second cooling fluid may be a refrigerant.

In example embodiments, a temperature of the second cooling fluid supplied to an inlet of the second cooling channel may be lower than a temperature of the first cooling fluid supplied to an inlet of the first cooling channel.

In example embodiments, the cooling plate may further include a third cooling plate spaced a third distance, which is greater than the second distance, from the cell block, and configured to allow a third cooling fluid to flow therethrough.

In example embodiments, each of the first cooling fluid and the third cooling fluid may be a coolant, and the second cooling fluid may be a refrigerant.

In example embodiments, a temperature of the second cooling fluid supplied to an inlet of the second cooling channel may be lower than a temperature of the first cooling fluid supplied to an inlet of the first cooling channel and a temperature of the third cooling fluid supplied to an inlet of the third cooling channel.

In example embodiments, the first cooling fluid may be a coolant, and each of the second cooling fluid and the third cooling fluid may be a refrigerant.

In example embodiments, a temperature of the second cooling fluid supplied to an inlet of the second cooling channel and a temperature of the third cooling fluid supplied to an inlet of the third cooling channel may be lower than a temperature of the first cooling fluid supplied to an inlet of the first cooling channel.

In example embodiments, a temperature of the second cooling fluid supplied to an inlet of the second cooling channel may be lower than a temperature of the first cooling fluid supplied to an inlet of the first cooling channel, and a temperature of the third cooling fluid supplied to an inlet of the third cooling channel may be lower than the temperature of the second cooling fluid supplied to the inlet of the second cooling channel.

In example embodiments, the battery pack may further include a thermally conductive adhesive layer between the cooling plate and the cell block.

In example embodiments, the cooling plate may support the cell block, and the pack housing may further include a side wall on the cooling plate and a top plate coupled to the side wall to cover the cell block.

An aspect of the present invention provides an electric vehicle including a vehicle body frame, a battery pack installed in the body frame, a first cooling device configured to supply a first cooling fluid to the battery pack, and a second cooling device configured to supply a second cooling fluid to the battery pack, in which the battery pack includes a cell block with a plurality of battery cells, and a pack housing accommodating the cell block and including a cooling plate supporting the cell block, the cooling plate includes a first cooling channel allowing the first cooling fluid supplied from the first cooling device to flow therethrough, and a second cooling channel provided below the first cooling channel and configured to allow the second cooling fluid supplied from the second cooling device to flow therethrough, the first cooling fluid is a coolant, and the second cooling fluid is a refrigerant.

In example embodiments, the electric vehicle may further include a third cooling device configured to supply a third cooling fluid to the battery pack, and the cooling plate may further include a third cooling channel provided below the second cooling channel and allowing the third cooling fluid supplied from the third cooling device to flow therethrough.

In example embodiments, the third cooling fluid may be a coolant.

In example embodiments, the third cooling fluid may be a refrigerant.

### [Advantageous Effects]

According to example embodiments of the present invention, a cooling plate includes a first cooling channel and a second cooling channel that are separated from each other in a vertical direction, and is capable of cooling a cell block of a battery assembly using a first cooling fluid flowing along the first cooling channel and a second cooling fluid flowing along the second cooling channel, thereby improving cooling capacity. Therefore, it is possible to effectively control heating of the battery pack, thereby improving the safety of the battery pack and an electric device including the battery pack.

According to example embodiments of the present invention, another cooling channel through which a coolant flows may be provided between the cell block and a cooling channel through which a refrigerant flows. In this case, the coolant may prevent the generation of dew and thus the battery pack can be cooled without performing a defrosting operation.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery pack according to example embodiments of the present invention.
FIG. 2 is a cross-sectional view of a part of the battery pack taken along line AA-AA' of FIG. 1.
FIG. 3 is a cross-sectional view of a part of the battery pack taken along line BB-BB' of FIG. 1.
FIGS. 4 and 5 are cross-sectional views of a battery pack according to example embodiments of the present invention.
FIG. 6 is a schematic view of an electric vehicle in which a battery pack according to example embodiments of the present invention is installed.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

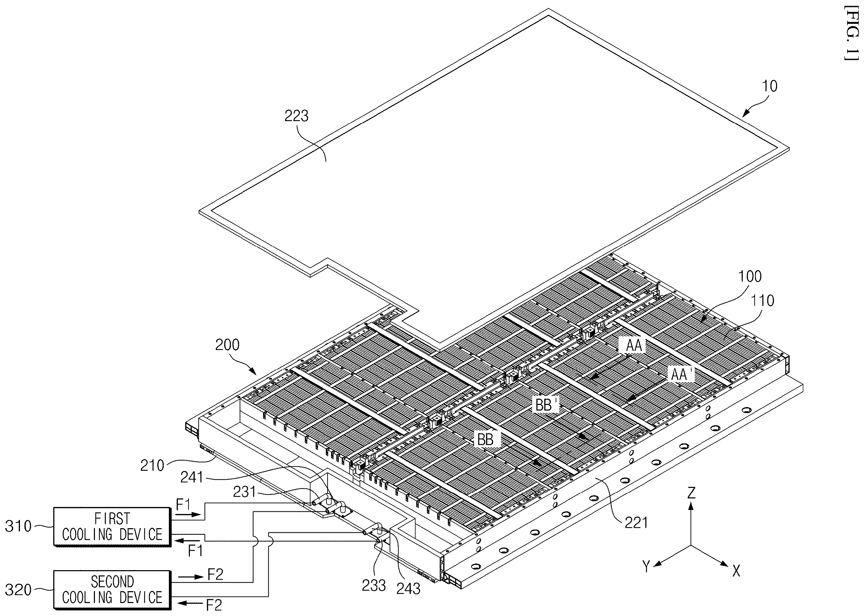

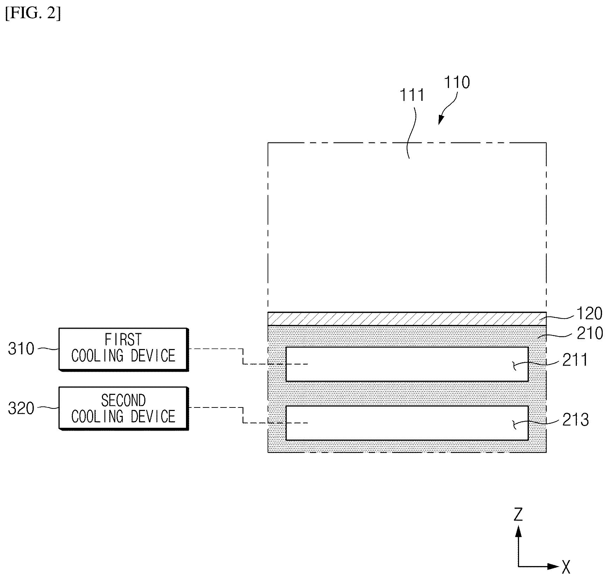

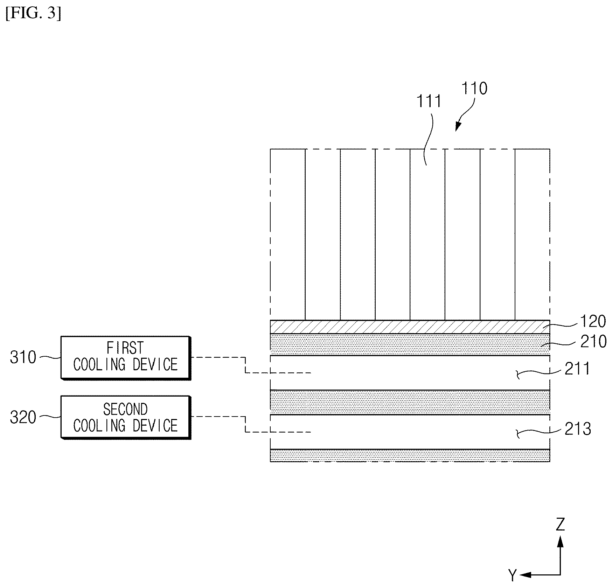

FIG. 1 is a perspective view of a battery cell 10 according to example embodiments of the present invention. FIG. 2 is a cross-sectional view of a part of the battery pack 10 taken along line AA-AA' of FIG. 1. FIG. 3 is a cross-sectional view of a part of the battery pack 10 taken along line BB-BB' of FIG. 1.

Referring to FIGS. 1 to 3, the battery pack 10 may include a pack housing 200 and a battery assembly 100 mounted in the pack housing 200. The battery pack 10 may include one or more battery assemblies 100 in the pack housing 200. In example embodiments, the battery pack 10 may include a plurality of battery assemblies 100 arranged in a first direction (e.g., an X-axis direction) and a second direction (e.g., a Y-axis direction).

The battery assembly 100 may include a cell block 110 including a plurality of battery cells 111.

Each of the battery cells 111 is a basic unit of a lithium ion battery, i.e., a secondary battery. Each of the battery cells 111 may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, the battery cells 111 may be pouch type battery cells and be stacked together in one battery assembly 100 in the second direction (e.g., the Y-axis direction). In example embodiments, in each battery assembly 100, a plurality of battery cells 111 may be pouch type battery cells whose length in the second direction (e.g., the Y-axis direction) is less than a length thereof in the first direction (e.g., the -axis direction) and be stacked in the second direction (e.g., the Y-axis direction).

When viewed in a plan view, the cell block 110 may have a rectangular shape. The cell block 110 may include a front surface and a rear surface that are opposite to each other in the first direction (e.g., the X-axis direction), two side surfaces (i.e., a first side surface and a second side surface) that are opposite to each other in the second direction (e.g., the Y-axis direction), and an upper surface and a lower surface that are opposite to each other in a vertical direction (e.g., a Z-axis direction).

A bus bar frame on which bus bars are mounted may be on each of the front and rear surfaces of the cell block 110. A plurality of bus bars may be mounted on the bus bar frame on the front surface of the cell block 110, and a plurality of bus bars may be mounted on the bus bar frame on the rear surface of the cell block 110.

A bus bar may be coupled to an electrode lead of the battery cell 111. For example, the bus bar may be coupled to the electrode lead of the battery cell 111 by welding. For example, each bus bar may be an inter-bus bar connected to electrode leads connected to different battery cells 111 belonging to the cell block 110 to electrically connect the different battery cells 111. For example, each bus bar may be a terminal-bus bar for electrically connecting the cell block 110 to another cell block 110 or a battery device.

The pack housing 200 may provide an accommodation space for accommodation of the battery assembly 100. The pack housing 200 may include a bottom plate 210, a side wall 221, and a top plate 223. The bottom plate 210 may have a flat plate shape parallel to the first direction (e.g., the X-axis direction) and the second direction (e.g., the Y-axis direction). The bottom plate 210 may support the battery assembly 100. The side wall 221 may be coupled to an edge part of the bottom plate 210 and extend in the vertical direction (e.g., the Z-axis direction). The side wall 221 may extend along the perimeter of the bottom plate 210 to surround the battery assembly 100. The top plate 223 may be on the side wall 221. The top plate 223 may be a pack lid coupled on the side wall 221 to cover the battery assembly 100.

The bottom plate 210 of the pack housing 200 may include a cooling channel configured to allow a cooling fluid to flow therethrough and may be configured to cool the cell block 110 of the battery assembly 100. In the present disclosure, the bottom plate 210 may be referred to as a cooling plate. A cooling fluid provided from the outside of the battery pack 10 may be supplied to an inlet of the cooling channel, flow along the cooling channel, and be discharged to the outside through an outlet of the cooling channel. While the cooling fluid flows along the cooling channel, the cell block 110 of the battery assembly 100 may be cooled. The cooling fluid may include a coolant and/or a refrigerant.

The refrigerant may be a phase-change refrigerant configured to be phase-changed between a liquid state and a gaseous state while being used in a cooling device for the battery pack 100. The cooling device configured to circulate the refrigerant to cool the battery pack 10 provides a refrigeration cycle including a compressor, a condenser, an expansion valve, and an evaporator, and the refrigerant is configured to absorb heat from the battery pack 10 while circulating in a cooling cycle provided by the cooling device. In the refrigeration cycle, the battery pack 10 with a heat load may constitute the evaporator of the refrigeration cycle. The coolant may be a liquid material whose phase does not change while being used in a cooling device for the battery pack 10. The cooling device configured to circulate the coolant to cool the battery pack 10 may include a chiller for cooling the coolant.

In example embodiments, the bottom plate 210 may include a first cooling channel 211 and a second cooling channel 213 that are separated from each other in the vertical direction (e.g., the Z-axis direction). The first cooling channel 211 and the second cooling channel 213 may be spaced apart from each other in the vertical direction (e.g., the Z-axis direction) to form a multi-layered cooling channel. The first cooling channel 211 and the second cooling channel 213 may overlap each other in the vertical direction (e.g., the Z-axis direction). The first cooling channel 211 may be positioned between the cell block 110 and the second cooling channel 213. In other words, the first cooling channel 211 may be spaced a first distance from the cell block 110, and the second cooling channel 213 may be spaced a second distance, which is greater than the first distance, from the cell block 110. The first cooling channel 211 and the second cooling channel 213 are not connected to each other and are separated from each other, and a first cooling fluid F1 supplied to the first cooling channel 211 and a second cooling fluid F2 supplied to the second cooling channel 213 are not mixed.

In example embodiments, the bottom plate 210 may be formed by an extrusion process, and a part of the bottom plate 210 that includes the first cooling channel 211 and the second cooling channel 213 vertically overlapping each other may be a single piece.

In example embodiments, a thermally conductive adhesive layer 120 may be interposed between the cell block 110 and the bottom plate 210. The thermally conductive adhesive layer 120 may thermally and physically connect the cell block 110 and the bottom plate 210. The thermally conductive adhesive layer 120 may include a resin and a thermally conductive filler contained in the resin. The thermally conductive adhesive layer 120 may include, for example, a thermal interface material (TIM).

A first cooling device 310 may supply the first cooling fluid F1 to the first cooling channel 211. The first cooling device 310 may be provided to an electric device (e.g., an electric vehicle) outside the battery pack 10. Alternatively, the first cooling device 310 may be included in the battery pack 10. A first inflow pipe 231 connected to the inlet of the first cooling channel 211 and a first outflow pipe 233 connected to the outlet of the first cooling channel 211 may be mounted on one side of the bottom plate 210. The first cooling device 310 may be connected to the first inflow pipe 231 through a supply pipe and connected to the first outflow pipe 233 through a recovery pipe. The first cooling device 310 may supply the first cooling fluid F1 of a predetermined temperature to the first cooling channel 211. The first cooling fluid F1 supplied from the first cooling device 310 is supplied to the inlet of the first cooling channel 211 through the first inflow pipe 231. While the first cooling fluid F1 flows from the inlet of the first cooling channel 211 to the outlet thereof, the cell block 110 may be cooled by heat exchange between the first cooling fluid F1 and the cell block 110, and the first cooling fluid F1 discharged from the outlet of the first cooling channel 211 may be recovered to the first cooling device 310 through the first outflow pipe 233 and the recovery pipe.

The second cooling device 320 may supply the second cooling fluid F2 to the second cooling channel 213. The second cooling device 320 may be provided to an electric device (e.g., an electric vehicle) outside the battery pack 10. Alternatively, the second cooling device 320 may be included in the battery pack 10. A second inflow pipe 241 connected to the inlet of the second cooling channel 213 and a second outflow pipe 243 connected to the outlet of the second cooling channel 213 may be mounted on one side of the bottom plate 210. The second cooling device 320 may be connected to the second inflow pipe 241 through a supply pipe and connected to the second outflow pipe 243 through a recovery pipe. The second cooling device 320 may supply the second cooling fluid F2 of a predetermined temperature to the second cooling channel 213. The second cooling fluid F2 supplied from the second cooling device 320 is supplied to the inlet of the second cooling channel 213 through the second inflow pipe 241. While the second cooling fluid F2 flows from the inlet of the second cooling channel 213 to the outlet thereof, the cell block 110 may be cooled by heat exchange between the second cooling fluid F2 and the cell block 110, and the second cooling fluid F1 discharged from the outlet of the second cooling channel 213 may be recovered to the second cooling device 320 through the second outflow pipe 243 and the recovery pipe.

In example embodiments, the first cooling fluid F1 flowing along the first cooling channel 211 may be different from the second cooling fluid F2 flowing along the second cooling channel 213. In example embodiments, the first cooling fluid F1 may be a coolant and the second cooling fluid F2 may be a refrigerant. In this case, the second cooling device 320 providing the second cooling fluid F2 may include elements for operating a refrigeration cycle using a refrigerant configured to be phase-changed.

In example embodiments, a supply temperature of the second cooling fluid F2 supplied to the inlet of the second cooling channel 213 may be lower than a supply temperature of the first cooling fluid F1 supplied to the inlet of the first cooling channel 211. In this case, a cooling capacity of a cooling system using the second cooling fluid F2 of a relatively low temperature may be greater than a cooling capacity of a cooling system using the first cooling fluid F1 of a relatively high temperature.

According to example embodiments of the present invention, the cooling plate includes the first cooling channel 211 and the second cooling channel 213 that are separated from each other in the vertical direction (e.g., the Z-axis direction), and the cell block 110 of the battery assembly 100 may be cooled using the first cooling fluid F1 flowing along the first cooling channel 211 and the second cooling fluid F2 flowing along the second cooling channel 213, thereby improving cooling capacity. Therefore, it is possible to effectively control heating of the battery pack 10, thereby improving the safety of the battery pack 10 and an electric devices including the battery pack 10.

In the case of a battery pack 10 according to a comparative example, a cooling plate may include only a cooling channel through which a refrigerant flows. In this case, when cooling is performed only using the refrigerant, a cell block 110 may be cooled to an extremely low temperature or a defrosting operation is required to remove dew generated on the perimeter of the cooling plate due to low temperature of the refrigerant.

According to example embodiments of the present invention, the first cooling channel 211 through which a coolant flows may be provided between the cell block 110 and the second cooling channel 213 through which the refrigerant flows. In this case, the coolant may prevent the generation of dew and thus the battery pack 10 can be cooled without performing the defrosting operation.

### (Second Embodiment)

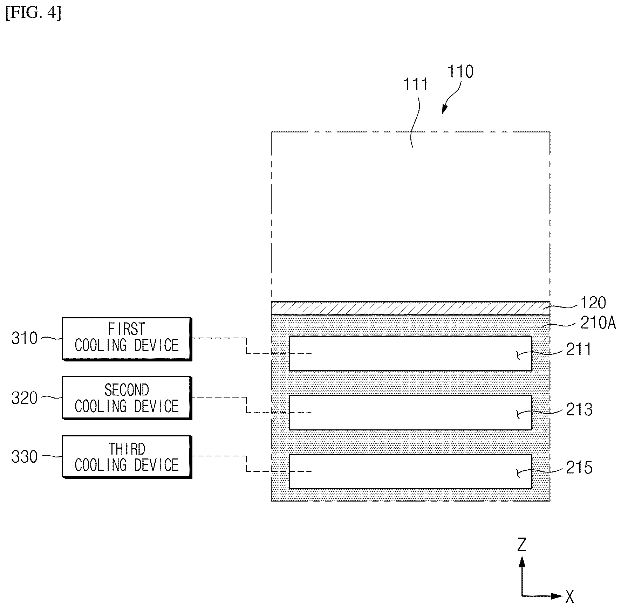

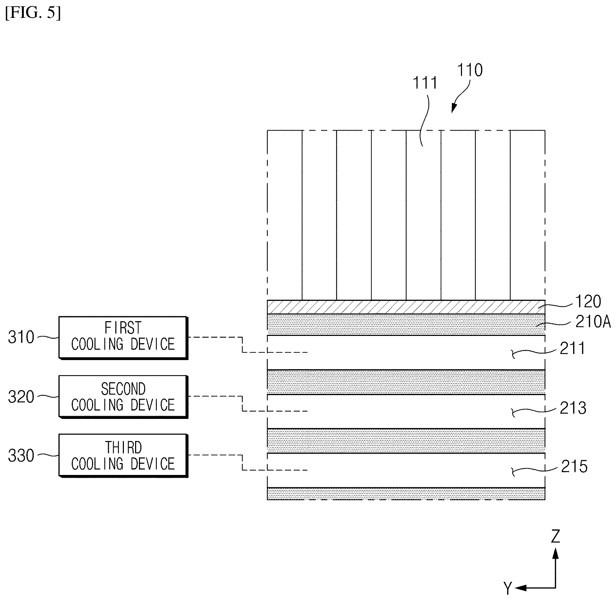

FIGS. 4 and 5 are cross-sectional views of a battery pack according to example embodiments of the present invention. FIG. 4 is a cross-sectional view of the battery pack taken along line AA-AA' of FIG. 1, and FIG. 5 is a cross-sectional view of the battery pack taken along line BB-BB' of FIG. 1. Hereinafter, a battery pack illustrated in FIGS. 4 and 5 will be described focusing on differences from the battery pack 10 described above with reference to FIGS. 1 to 3.

Referring to FIGS. 4 and 5, a bottom plate 210A of a pack housing 200 may include a first cooling channel 211, a second cooling channel 213, and a third cooling channel 215 that are separated from one another in the vertical direction (e.g., the Z-axis direction). The third cooling channel 215 may overlap the first cooling channel 211 and the second cooling channel 213 in the vertical direction (e.g., the Z-axis direction). The third cooling channel 215 may be below the second cooling channel 213. The second cooling channel 213 may be spaced a second distance from a cell block 110, and the third cooling channel 215 may be spaced a third distance, which is greater than the second distance, from the cell block 110. The third cooling channel 215 is separated from the first cooling channel 211 and the second cooling channel 213, and a third cooling fluid supplied to the third cooling channel 215 is not mixed with a first cooling fluid in the first cooling channel 211 and a second cooling fluid in the second cooling channel 213. In example embodiments, the bottom plate 210A may be formed by the extrusion process, and a part of the bottom plate 210A including the first cooling channel 211, the second cooling channel 213, and the third cooling channel 215 that overlap one another vertically may be a single piece.

A third cooling device 330 may supply the third cooling fluid to the third cooling channel 215. The third cooling device 330 may be provided to an electric device (e.g., an electric vehicle) outside the battery pack. Alternatively, the third cooling device 330 may be included in the battery pack. A third inflow pipe connected to an inlet of a third cooling channel 215 and a third outflow pipe connected to an outlet of the third cooling channel 215 may be mounted on one side of the bottom plate 210A. The third cooling device 330 may be connected to the third inflow pipe through a supply pipe and connected to the third outflow pipe through a recovery pipe. The third cooling device 330 may supply the third cooling fluid of a predetermined temperature to the third cooling channel 215. The third cooling fluid provided from the third cooling device 330 is supplied to the inlet of the third cooling channel 215 through the third inflow pipe. While the third cooling fluid flows from the inlet of the third cooling channel 215 to the outlet thereof, the cell block 110 may be cooled by heat exchange between the third cooling fluid and the cell block 110, and the third cooling fluid discharged from the outlet of the third cooling channel 215 may be recovered to the third cooling device 330 through the third outflow pipe and the recovery pipe. The third cooling fluid may be a coolant or a refrigerant. When the third cooling fluid is a refrigerant, the third cooling device 330 providing the third cooling fluid may include elements for operating a refrigeration cycle using a refrigerant configured to be phase-changed.

In example embodiments, each of the first cooling fluid and the third cooling fluid may be a coolant, and the second cooling fluid may be a refrigerant.

In example embodiments, the first cooling fluid may be a coolant, and each of the second cooling fluid and the third cooling fluid may be a refrigerant.

In example embodiments, each of the first cooling fluid and the second cooling fluid may be a coolant and the third cooling fluid may be a refrigerant.

In example embodiments, a supply temperature of the second cooling fluid supplied to the inlet of the second cooling channel 213 may be lower than a supply temperature of the first cooling fluid supplied to the inlet of the first cooling channel 211 and a supply temperature of the third cooling fluid supplied to the inlet of the third cooling channel 215.

In example embodiments, the supply temperature of the second cooling fluid supplied to the inlet of the second cooling channel 213 and the supply temperature of the third cooling fluid supplied to the inlet of the third cooling channel 215 may be lower than the supply temperature of the first cooling fluid supplied to the inlet of the first cooling channel 211.

In example embodiments, the supply temperature of the second cooling fluid supplied to the inlet of the second cooling channel 213 may be lower than the supply temperature of the first cooling fluid supplied to the inlet of the first cooling channel 211, and the supply temperature of the third cooling fluid supplied to the inlet of the third cooling channel 215 may be lower than the supply temperature of the second cooling fluid supplied to the inlet of the second cooling channel 213.

According to example embodiments of the present invention, a cooling plate includes the first to third cooling channels 211, 213, and 215 that are separated from one another in the vertical direction (e.g., the Z-axis direction), and the cell block 110 of a battery assembly 100 may be cooled using the first to third cooling fluids flowing along the first to third cooling channels 211, 213, and 215, thereby improving cooling capacity.

According to example embodiments of the present invention, the first cooling channel 211 through which the coolant flows is provided between the cell block 110 and the second cooling channel 213 through which the refrigerant flows to prevent generation of dew using the refrigerant, thereby cooling the battery pack without performing the defrosting operation.

### (Third Embodiment)

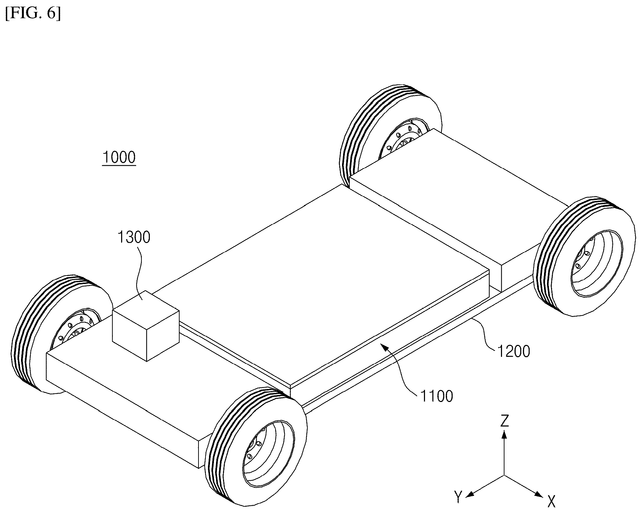

FIG. 6 is a schematic view of an electric vehicle 1000 in which a battery pack 1100 according to example embodiments of the present invention is installed.

For the sake of simplicity, in FIG. 6, some components of the electric vehicle 1000 are not illustrated, and a part of a body frame 1200 forming a lower frame of the vehicle, and the battery pack 1100, tires, and a cooling device 1300 that are installed on the body frame 1200 are illustrated. The battery pack 1100 may be below a cabin room in which a passenger gets. For example, the battery pack 1100 may include the battery pack 10 described above with reference to FIGS. 1 to 3 or the battery pack described above with reference to FIGS. 4 and 5. The cooling device 1300 may provide a cooling fluid for cooling the battery pack 1100 to a cooling plate of a pack housing. The cooling device 1300 may include a plurality of devices that provide different types of cooling fluids. In example embodiments, the cooling device 1300 may include the first cooling device 310 and the second cooling device 320 described above with reference to FIGS. 1 to 3. In example embodiments, the cooling device 1300 may include the first cooling device 310, the second cooling device 320 and the third cooling device 330 described above with reference to FIGS. 4 and 5.

According to example embodiments of the present invention, heating of the battery pack 1100 can be effectively controlled by improving cooling capacity of a cooling system for the battery pack 1100. Accordingly, the safety and durability of the battery pack 1100 and the electric vehicle 1000 including the battery pack 1100 may improve.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a cell block including a plurality of battery cells; and
a pack housing accommodating the cell block and including a cooling plate connected to the cell block,
wherein the cooling plate comprises:
a first cooling channel spaced a first distance from the cell block and configured to allow a first cooling fluid to flow therethrough; and
a second cooling channel spaced a second distance from the cell block and configured to allow a second cooling fluid to flow therethrough, wherein the second distance is greater than the first distance, and
the first cooling fluid and the second cooling fluid are different from each other.

2. The battery pack of claim 1, wherein
the first cooling fluid comprises a coolant, and
the second cooling fluid comprises a refrigerant.

3. The battery pack of claim 1, wherein
a temperature of the second cooling fluid supplied to an inlet of the second cooling channel is lower than a temperature of the first cooling fluid supplied to an inlet of the first cooling channel.

4. The battery pack of claim 1, wherein
the cooling plate further comprises a third cooling plate spaced a third distance from the cell block and configured to allow a third cooling fluid to flow therethrough, wherein the third distance is greater than the second distance.

5. The battery pack of claim 4, wherein
each of the first cooling fluid and the third cooling fluid comprises a coolant, and
the second cooling fluid comprises a refrigerant.

6. The battery pack of claim 4, wherein
a temperature of the second cooling fluid supplied to an inlet of the second cooling channel is lower than a temperature of the first cooling fluid supplied to an inlet of the first cooling channel and a temperature of the third cooling fluid supplied to an inlet of the third cooling channel.

7. The battery pack of claim 4, wherein
the first cooling fluid comprises a coolant, and
each of the second cooling fluid and the third cooling fluid comprises a refrigerant.

8. The battery pack of claim 4, wherein
a temperature of the second cooling fluid supplied to an inlet of the second cooling channel and a temperature of the third cooling fluid supplied to an inlet of the third cooling channel are lower than a temperature of the first cooling fluid supplied to an inlet of the first cooling channel.

9. The battery pack of claim 4, wherein
a temperature of the second cooling fluid supplied to an inlet of the second cooling channel is lower than a temperature of the first cooling fluid supplied to an inlet of the first cooling channel, and
a temperature of the third cooling fluid supplied to an inlet of the third cooling channel is lower than the temperature of the second cooling fluid supplied to the inlet of the second cooling channel.

10. The battery pack of claim 1, further comprising
a thermally conductive adhesive layer between the cooling plate and the cell block.

11. The battery pack of claim 1, wherein
the cooling plate supports the cell block, and
the pack housing further comprises:
a side wall on the cooling plate; and
a top plate coupled to the side wall to cover the cell block.

12. An electric vehicle comprising:
a vehicle body frame;
a battery pack installed in the body frame;
a first cooling device configured to supply a first cooling fluid to the battery pack; and
a second cooling device configured to supply a second cooling fluid to the battery pack,
wherein the battery pack comprises:
a cell block including a plurality of battery cells; and
a pack housing accommodating the cell block and including a cooling plate supporting the cell block,
the cooling plate comprises:
a first cooling channel allowing the first cooling fluid supplied from the first cooling device to flow therethrough; and
a second cooling channel provided below the first cooling channel and configured to allow the second cooling fluid supplied from the second cooling device to flow therethrough, and
the first cooling fluid comprises a coolant, and the second cooling fluid comprises a refrigerant.

13. The electric vehicle of claim 12, further comprising
a third cooling device configured to supply a third cooling fluid to the battery pack, and
wherein the cooling plate further comprises a third cooling channel provided below the second cooling channel and allowing the third cooling fluid supplied from the third cooling device to flow therethrough.

14. The electric vehicle of claim 13, wherein
the third cooling fluid comprises a coolant.

15. The electric vehicle of claim 13, wherein
the third cooling fluid comprises a refrigerant.
